# EUROPÄISCHE PATENTSCHRIFT

(11) **EP 0 523 746 B1**
(45) Veröffentlichungstag und Bekanntmachung des Hinweises auf die Patenterteilung: **26.09.2001**
(21) Anmeldenummer: 92114412.7
(22) Anmeldetag: 14.03.1989
(51) Int. Cl.: A01N 57/20, A01N 25/04, A01N 25/30

(54) **Flüssige herbizide Mittel**
Liquid herbicidal agent
Agent liquide herbicide

(30) Priorität: 18.03.1988 DE 3809159
(43) Veröffentlichungstag der Anmeldung: 20.01.1993
(62) Teilanmeldung aus: 89104517.1
(73) Patentinhaber: Aventis CropScience GmbH, 65929 Frankfurt am Main (DE)
(72) Erfinder: Albrecht, Konrad, Dr., W-6233 Kelkheim (Taunus) (DE); Kocur, Jean, Dr., W-6238 Hofheim am Taunus (DE); Langelüddeke, Peter, Dr., W-6238 Hofheim am Taunus (DE)

(56) Entgegenhaltungen:
- EP-A- 0 048 436
- EP-A- 0 297 305
- GB-A- 2 178 960
- CENTRAL PATENTS INDEX, BASIC ABSTRACTS JOURNAL Section Ch, Week B43, 19. Dezember 1979 Derwent Publications Ltd., London, GB; Class C, AN 78145B/43 &
- CHEMICAL PATENTS INDEX, BASIC ABSTRACTS JOURNAL Section Ch, Week 8705, 1. April 1987 Derwent Publications Ltd., London, GB; Class C01, AN 87-032875/05 &

## Beschreibung

Aus der US-PS 4 168 963 ist bekannt, daß Verbindungen der Forme 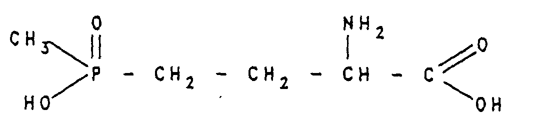 und ihre Derivate (I) eine gute und breite Wirksamkeit gegen Unkräuter vieler botanischer Familien besitzen. Die Verbindungen I enthalten ein asymmetrisches Kohlenstoffatom. Die Formel I umfaßt alle Stereoisomeren (D- und L-Form), insbesondere das biologisch aktive L-Enantiomere. Von besonderer Bedeutung ist das Ammoniumsalz dieser Verbindungen (L-Form ebenso wie Racemat).

Die Verbindungen eignen sich zur nichtselektiven Bekämpfung von unerwünschtem Pflanzenwuchs, z.B. auf landwirtschaftlichen Kulturflächen, im Weinbau, in Obst- und Ölpalmenplantagen, an Industrie- und Eisenbahnanlagen. Sie werden meist als wäßrige Lösungen formuliert.

Ferner ist bekannt, daß sich die Wirksamkeit von Herbiziden in vielen Fällen durch Zugabe von oberflächenaktiven Mitteln verbessern läßt (vgl. DE-OS 2 554 532). Besonders häufig werden zu diesem Zweck (C₁₂-C₁₈)-Fettalkoholpolyglykoläther und Alkylphenolpolyglykoläther verwendet. In der EPA 0 048 436 wird gezeigt, daß Kokosfettalkyl-benzyl-dimethylammoniumchlorid oder C₁₂-C₁₈-Alkylpolyglykoläthersulfate die Wirkung von I gegenüber den im Vergleich mitgeprüften Fettalkohol- und Alkylphenolpolyglykoläthern verstärken. Allerdings sind die wasserhaltigen flüssigen Formulierungen von I nur stabil, wenn ihnen polare Lösungmittel, wie z.B. Dimethylformamid, N-Methylpyrrolidon oder Äthylenglykolmonomethyläther zugesetzt werden. Andernfalls treten in der Formulierung Phasentrennungen in wirkstoffangereicherte, tensidärmere und wirkstoffärmere, tensidangereicherte Schichten ein.

Ferner hat sich gezeigt, daß die Kältestabilität dieser Formulierungen oft für die Erfordernisse der Praxis unzureichend ist. Zwar fallen Wirkstoff bzw. Netzmittel erst unter dem Gefrierpunkt zwischen 0 und -10°C aus, bei im Frost gelagerten Präparaten kann es jedoch bei Abfüllungen aus größeren Behältern in Kleingebinde doch noch Probleme geben. So müssen z.B. die Großgebinde erst längere Zeit warm gelagert werden, damit sich Wirkstoff und Tensid wieder auflösen und die Formulierung homogen in Kleinpackungen abgefüllt werden kann. Weiterhin sollten die Präparate wegen der Brennbarkeit und einer möglichen Anwendergefährdung keine oder möglichst geringe Menge organischer Lösungsmittel enthalten. Wichtig ist auch eine Verbesserung der Regenbeständigkeit der Formulierungen, welche als Wirkstoff Verbindungen der Formel I oder deren Derivate enthalten, da diese Wirkstoffe wasserlöslich sind und über die Blattoberfläche von den Pflanzen aufgenommen werden. Somit besteht vor allem in tropischen Gebieten die Gefahr, daß der Wirkstoff durch nach der Applikation einsetzenden Regen von der Blattoberfläche abgewaschen und damit unwirksam wird. Zusätze an Haftmitteln, wie man sie zur Verbesserung der Regenbeständigkeit in Spritzpulvern verwendet, wie z.B. Polyvinylalkohole, -pyrrolidone, -acrylate, -acetate, Hydroxiäthyl-, Carbäthoxiäthyl-, Methylcellulosen, Dextrine, hydrolysierte Peptide, Heteropolysaccharide, Ligninsulfonate, kationaktive Verbindungen oder Mineralöle hatten bei Versuchen kein Effekte gezeigt.

Somit sind unter praktischen Gesichtspunkten insbesondere die folgenden Forderungen an flüssige Formulierungen der Verbindungen der Formel I zu stellen:
a) hohe Kältestabilität
b) bessere Herbizidwirkung gegenüber den bekannten Formulierungen
c) hohe Regenbeständigkeit und
d) möglichst geringer Zusatz von organischen Lösungsmitteln.

Überraschenderweise wurde nun gefunden, daß sich Formulierungen der obengenannten Wirkstoffe, welche diese verbesserten Eigenschaften aufweisen, durch die Verwendung bestimmter Tenside erhalten lassen.

Gegenstand der vorliegenden Erfindung sind daher flüssige herbizide Mittel, gekennzeichnet durch einen Gehalt an einer Verbindung der Formel 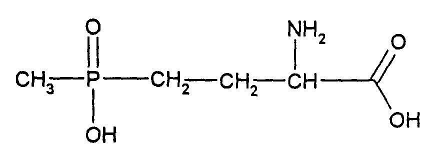 in Form des Racemates oder des L-Enantiomeren, deren Niederalkylester oder Salzen mit Säuren oder Basen in Kombination mit Tensiden in Form von
- (C₁₀-C₁₈)-Fettalkoholpolyglykolethersulfobernsteinsäurehalbestern oder
- (C₁₀-C₁₈)-Fettalkoholpolyglykolethersulfobernsteinsäureestern oder
- Mischungen von (C₁₂-C₁₈)-Alkylsulfobernsteinsäurehalbestern mit (C₁₀-C₁₈)-Fettalkoholpolyglykolethersulfaten oder
- Mischungen von (C₁₀-C₁₈)-Fettalkoholpolyglykolethersulfobernsteinsäurehalbestern mit (C₁₀-C₁₈)-Fettalkoholpolyglykolethersulfaten oder
- Mischungen von (C₁₀-C₁₈)-Fettalkoholpolyglykolethersulfobernsteinsäureestern mit (C₁₀-C₁₈)(C₁₀-C₁₈)-Fettalkoholpolyglykolethersulfonatenoder
- Mischungen von Isodecylsulfobernsteinsäurehalbestern mit (C₁₀-C₁₈)-Fettalkoholpolyglykolethersulfaten,
wobei als Sulfate Alkali-, Ammonium-, Erdalkali- oder substituierte Alkyl- oder Alkanolaminsalze der entsprechenden Schwefelsäure verwendet werden können.

Bevorzugte Anwendung als Tenside finden dabei (C₁₂-C₁₈)-Alkylsulfobernsteinsäurehalbester sowie die Mischungen dieser Verbindungen mit (C₁₀-C₁₈)-Fettalkoholpolyglykolethersulfaten.

Eine weitere bevorzugte Ausgestaltung der erfindungsgemäßen Mittel besteht darin, daß sie neben 5 - 40 Gew.-% einer Verbindung I den 0,5 - 8-fachen Gewichtsanteil der erfindungsgemäßen Tenside und 0 - 20 Gew.-% eines wassermischbaren polaren Lösungsmittels enthalten, wie z.B. von Methylglykol, Propylenglykolmethylether, PEG 200, Isopropanol, DMF oder NMP.

Weitere oberflächenaktive Substanzen sind insbesondere zwischen 4 - 15 Gew.-% in der fertigen Formulierung enthalten.

Die erfindungsgemäßen Mittel enthalten in Wasser gelöster Form 5 - 40 Gew.-% eines Wirkstoffes der Formel I sowie 0,5 - 8 Teile der erfindungsgemäßen Tenside pro Wirkstoffteil. Zusätzlich können weitere oberflächenaktive Mittel zur Verbesserung des Benetzungsvermögens, Haft- und Bindemittel, Harnstoff oder anorganische Salze wie z.B. Ammoniumsulfat, wasserlösliche Lösungsmittel sowie Entschäumer enthalten sein. Auch können diese Tenside vorteilhaft in Kombinationsformulierungen einer Verbindung I mit anderen herbiziden Wirkstoffen wie z.B. Simazin, Terbutylazin, Diuron, Monolinuron, Metolachlor, Chlortoluron, Oxyfluorfen, Bifenox, Imazethapyr, Chlorimuron-ethyl, Sulfonylharnstoffen wie z.B. Sulfometuron, Metsulfuron eingesetzt werden und die Wirkung von I verstärken.

Die Tenside können auch vor der Applikation unmittelbar der Spritzbrühe der Wirkstofflösung von I oder den Mischformulierungen mit den genannten Herbiziden zugesetzt werden.

Die erfindungsgemäßen Mittel liegen als Lösungen, in Mischungen mit wasserunlöslichen Wirkstoffen wie z.B. den o.a. Triazin- und Harnstoffherbizid-Wirkstoffen als Suspensionskonzentrate vor, in welchen die unlöslichen Wirkstoffe in der festen, die Verbindung I und die erfindungsgemäßen Tenside in der wässrigen flüssigen Phase enthalten sind. Niedrigschmelzende Wirkstoffe oder flüssige Wirkstoffe wie Metolachlor werden mit einer Verbindung l und den Tensiden in Form einer stabilen Emulsion zubereitet, in welcher in der wässrigen Phase die Verbindung I und die erfindungsgemäßen Tenside, in der "öligen" flüssigen Phase der wasserunlösliche flüssige oder der in organischen Lösungsmitteln gelöste Wirkstoff enthalten ist, wobei die organischen Lösungsmittel selbst nicht wasserlöslich sein sollten.

Die Herstellung derartiger Mischformulierungen kann auf verschiedene Weise erfolgen. Zum einen kann man so vorgehen, daß man die einzelnen Bestandteile separat in Form von Einzeldispersionen und Lösungen herstellt und diese dann unter Verwendung einer Kolloidmühle mischt. Ebenso ist es möglich, die Wirkstoffe der feindispersen Phase zusammen zu vermahlen und dieser Mischdispersion die Wirkstofflösung zuzusetzen. Prinzipiell kann man auch alle Wirkstoffe in einem Durchgang zur gewünschten Mischformulierung verarbeiten.

Die auf diese Weise hergestellten Kombinationsformulierungen sind lagerstabil, zeigen nahezu keine chemischen Veränderungen und sind anwendungstechnisch einfach zu handhaben.

Die erfindungsgemäßen Mittel werden nach Verdünnen in Wasser appliziert. Als Wirkstoffe der Verbindung I kommen insbesondere Verbindungen in Betracht, die in der US-PS 4 168 963 beschrieben sind oder entsprechend hergestellt werden können wie z.B. (3-Amino-3-carboxy-propyl)-methyl-phosphinsäure (Phosphinothricin), deren Hydrochlorid, Mononatrium-, Dinatrium-, Monokalium-, Dikalium-, Monocalcium-, Ammonium-, NH₃(CH₃)⁺-, NH₂(CH₃)₂⁺-, NH(CH₃)₃⁺-, NH(CH₃)₂(C₂H₄OH)⁺- oder NH₂(CH₃)(C₂H₄OH)⁺-Salze oder deren Methyl-, Ethyl-, Propyl- oder Butylester.

Zur Herstellung der erfindungsgemäßen Mittel löst man den Wirkstoff in Wasser und setzt die errechnete Menge des wirkungsverstärkenden oberflächenaktiven Mittels und gegebenenfalls weitere übliche Hilfsmittel wie Lösungsvermittler (Propylenglykolmonomethylether, Glykole, Polyglykole, Blockpolymere, DMF, N-Methylpyrrolidon etc.), weitere Netzmittel, Farbstoffe oder Entschäumer (z.B. Silicone, Polyäthylenpolypropylenglykole, Seifen etc.) zu und vermischt innig.

Die erfindungsgemäßen Tenside und die weiteren üblichen Formulierungshilfsmittel werden beispielsweise beschrieben in: Watkins, "Handbook of Insecticide Dust Diluents and Carriers", 2nd Ed., Darland Books, Caldwell N.J.; H.v.Olphen, "Introduction to Clay Colloid Chemistry", 2nd Ed., J. Wiley & Sons, N.Y.; Marschen, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Als Beispiele für die erfindungsgemäßen Tenside seien genannt:
- Fettalkoholpolyglykoläthersulfate: Genapol LRO® , Genapol LRC® , (Hoechst AG), Gezavon LL 20® (Zimmerli AG), Texapon ASV® , Texapon Na® , Texapon M (Henkel KG).

Die nachfolgenden Beispiele dienen zur Erläuterung der Erfindung:

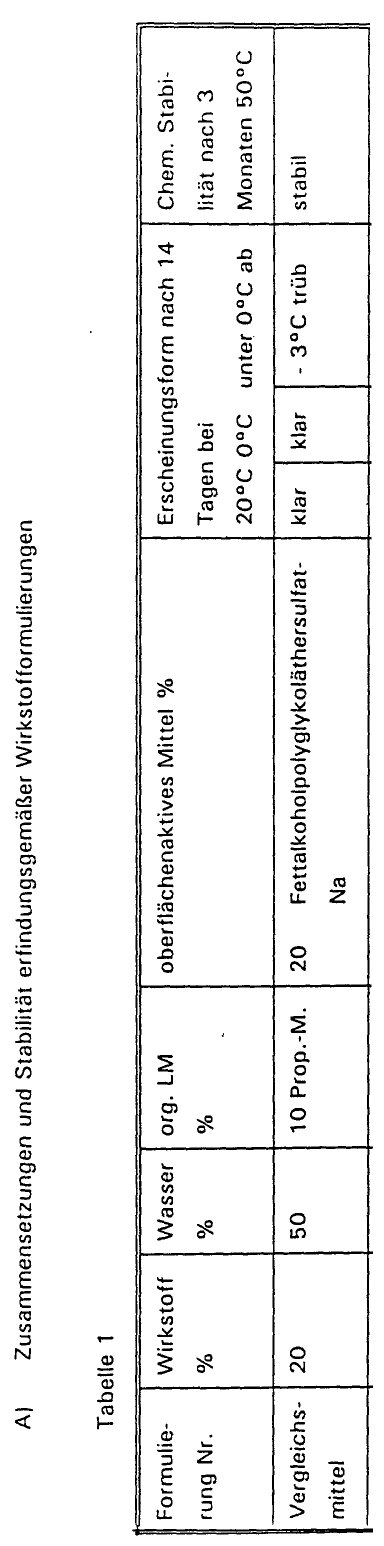

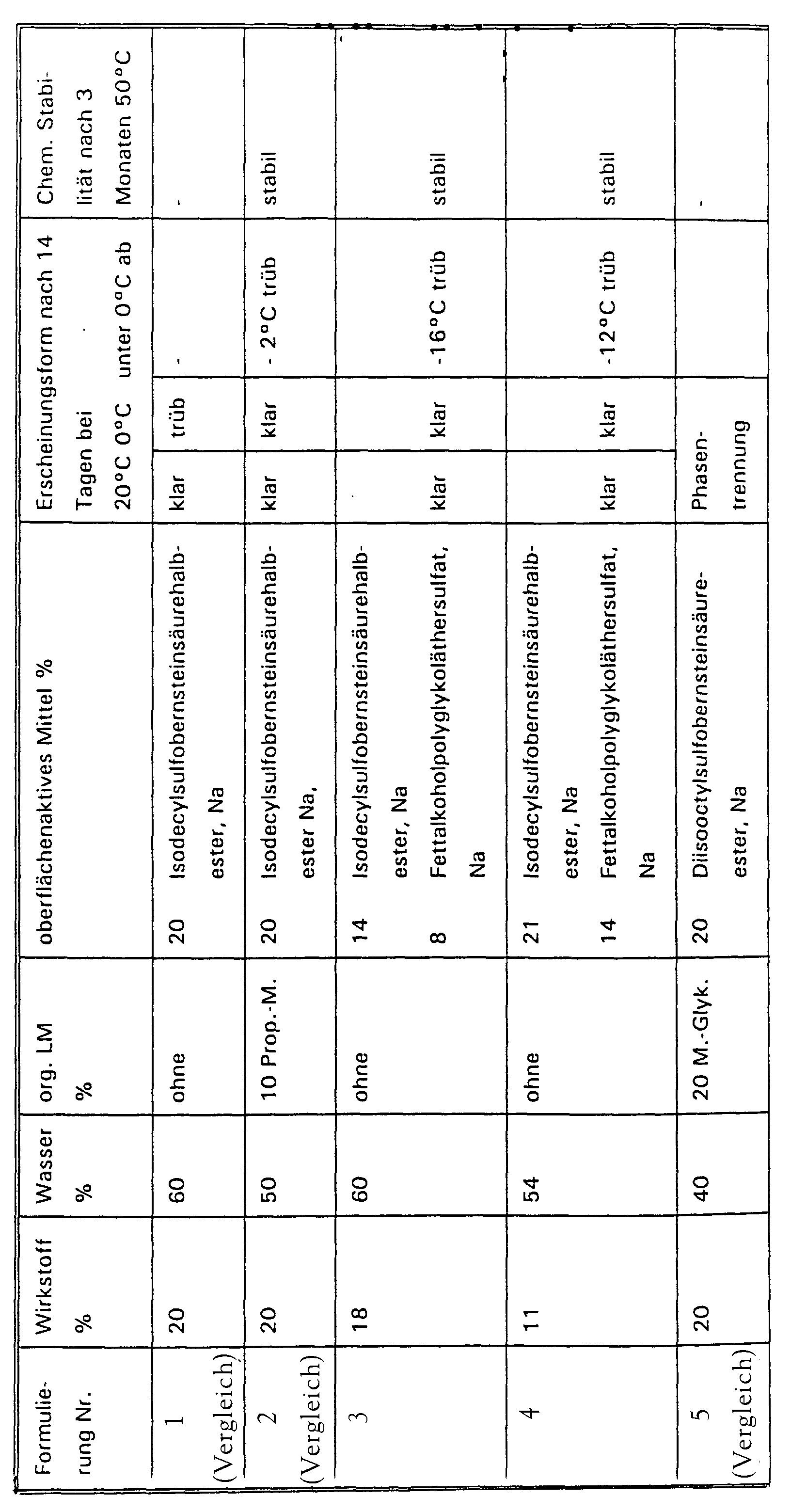

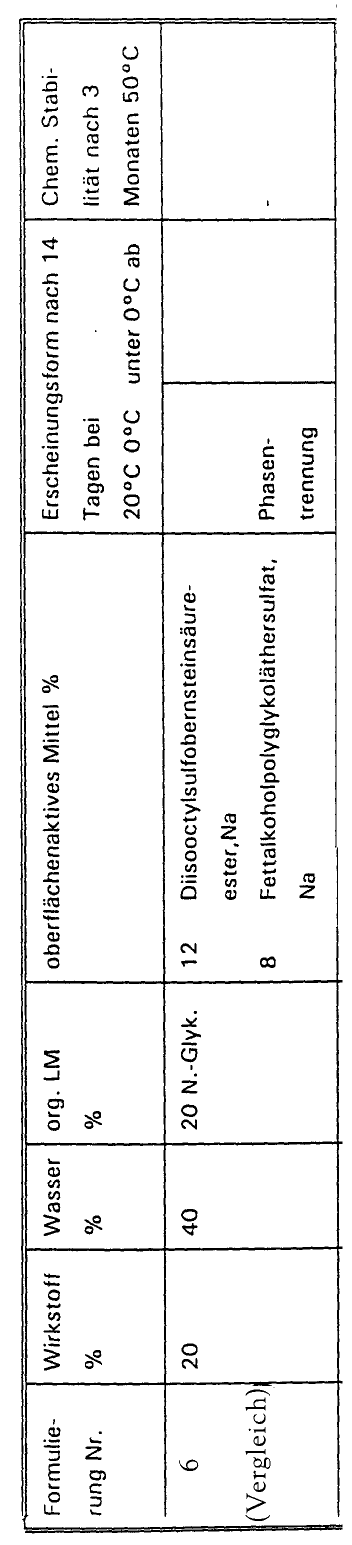

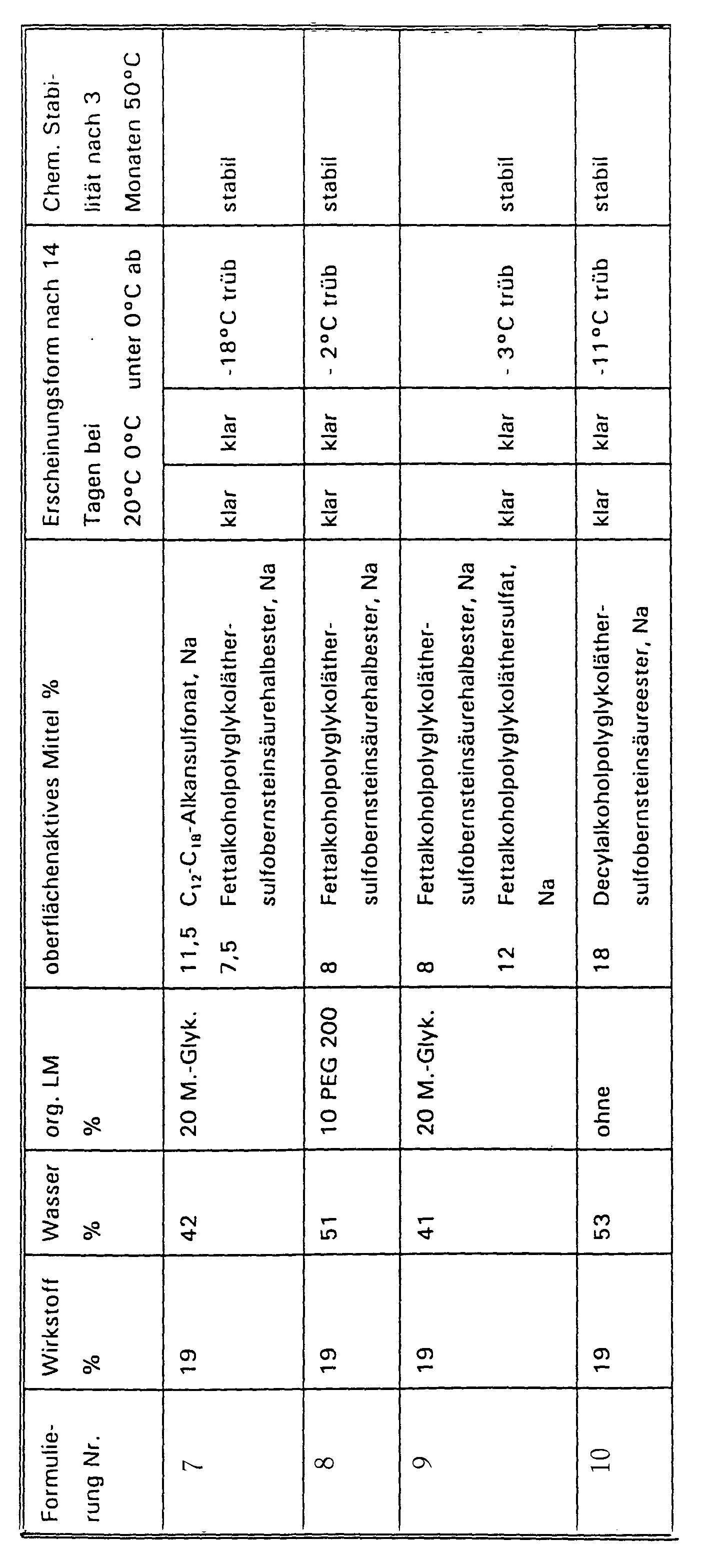

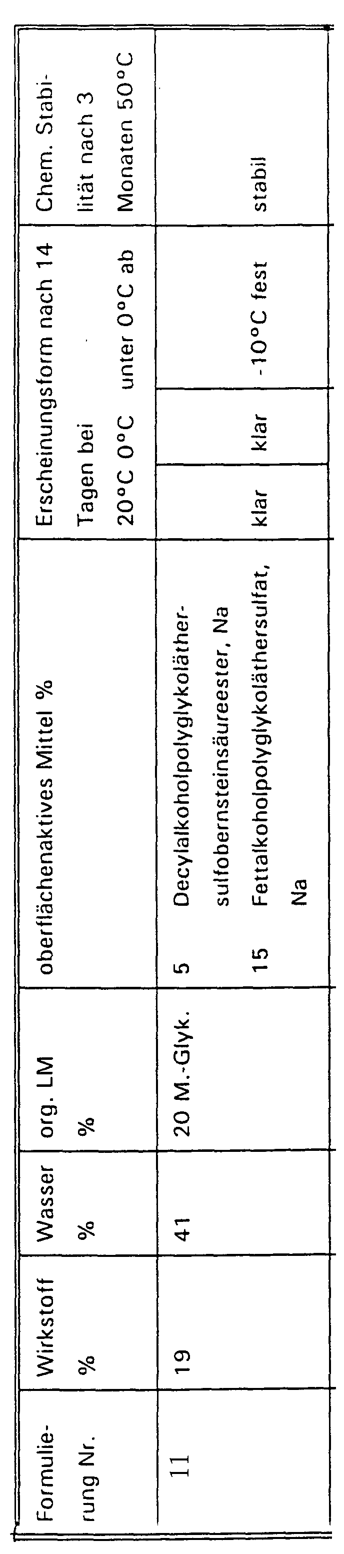

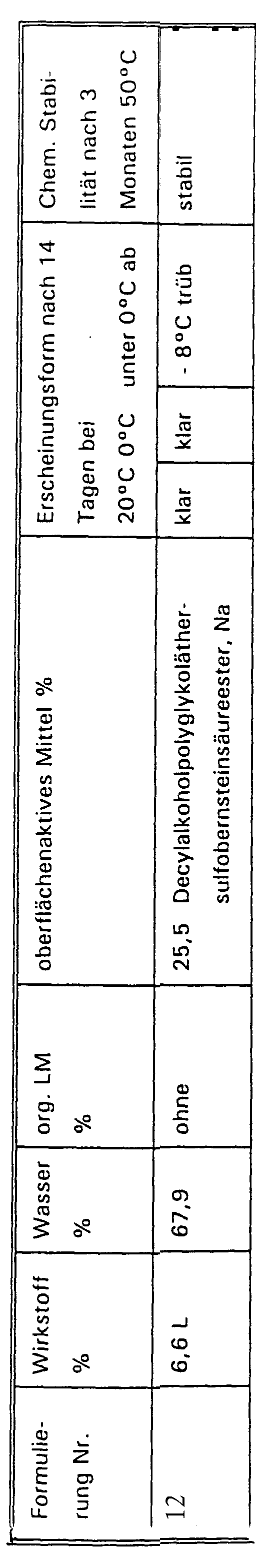

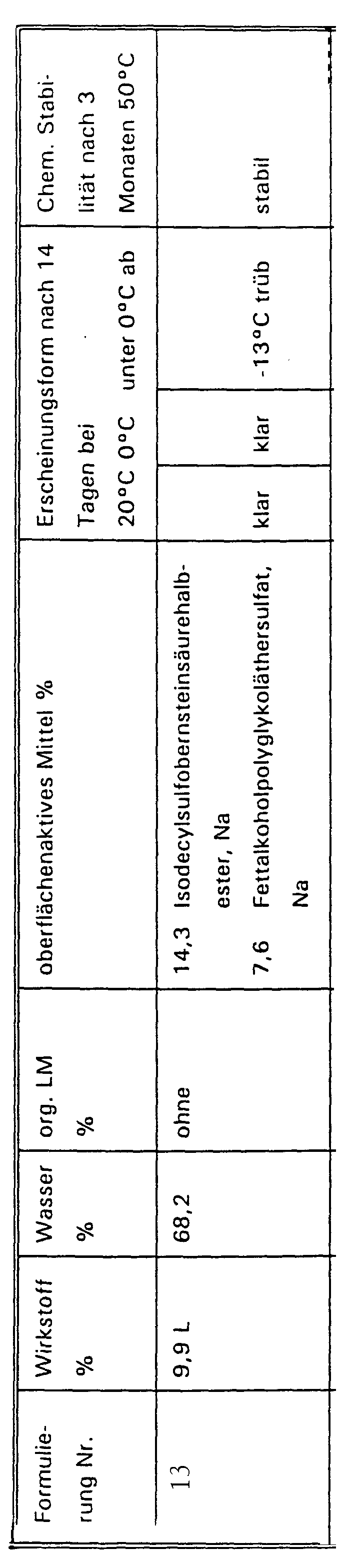

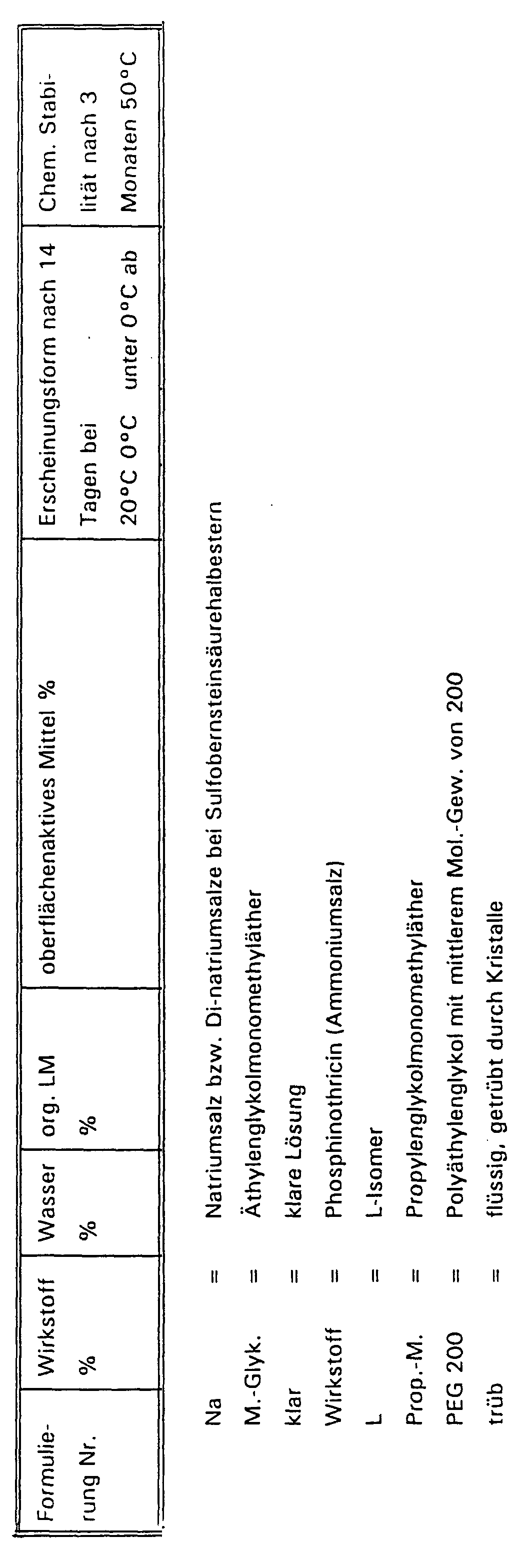

### B) Biologische Beispiele

### Beispiel 1

In einem Feldversuch wurden Raps, Ackerbohne und Melde im 3-5-Blattstadium mit den in Wasser verdünnten erfindungsgemäßen Formulierungen besprüht. Die Wasseraufwandmenge betrug 300 l/ha. 13 Tage nach der Behandlung wurden die Pflanzen bonitiert. Die Schädigung ist in % ausgedrückt. Die Wirkstoffkonzentration und die Versuchsergebnisse sind in Tab. 2 wiedergegeben.

**Tabelle 2**

| Feldversuche an Raps, Ackerbohne und Melde | | | | | | |
|---|---|---|---|---|---|---|
| Wirkung in % 13 Tage nach Behandlung | | | | | | |
| Formulierung aus Tab. 1 | | | Dosierung in kg Wirkstoff/ha | | | |
| Nr. | Raps | | Ackerbohne | | Melde | |
| | 0,5 | 1,0 | 0,5 | 1,0 | 0,5 | 1,0 |
| Vergleichsmittel | 73 | 85 | 91 | 99 | 88 | 90 |
| 7 | 75 | 90 | 96 | 100 | 93 | 99 |
| 8 | 80 | 90 | 95 | 99 | 92 | 93 |
| 9 | 82 | 90 | 95 | 100 | 94 | 97 |
| 10 | 78 | 94 | 95 | 99 | 93 | 95 |
| 11 | 80 | 95 | 96 | 99 | 92 | 95 |

### Beispiel 2.

Zur Ermittlung der Regenbeständigkeit der erfindungsgemäßen Formulierungen wurden im Gewächshaus angezogene Gerstenpflanzen im 3-Blattstadium mit Lösung der verschiedenen Formulierungen besprüht (Wasseraufwandmenge 300 l/ha). Ein Teil der Pflanzen wurde etwa 3 Stunden nach dieser Behandlung einer künstlichen Beregnung ausgesetzt, wobei etwa 10 mm künstlicher Regen appliziert wurde. 19 Tage nach dieser Behandlung wurde die Wirksamkeit (Schädigung der Pflanzen) bonitiert. Die Wirkstoffkonzentrationen und die Versuchsergebnisse sind in Tab. 3 wiedergegeben.

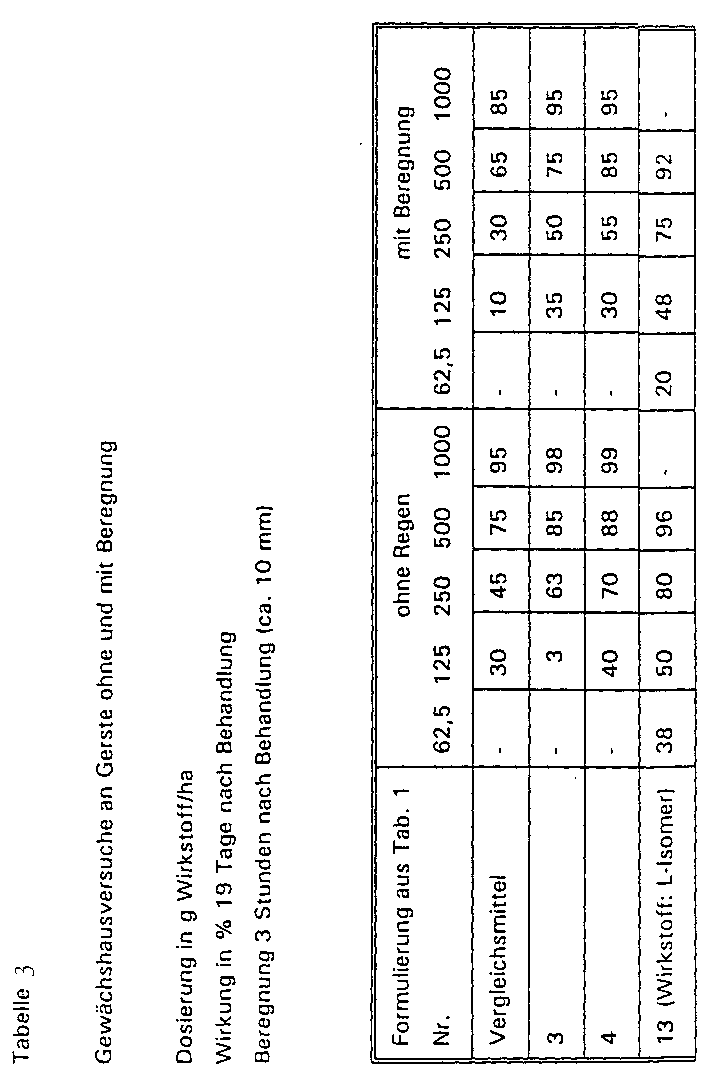

## Patentansprüche

1. Flüssige herbizide Mittel, **gekennzeichnet durch** einen Gehalt an einer Verbindung der Formel 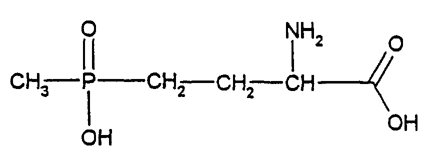 in Form des Racemates oder des L-Enantiomeren, deren Niederalkylester oder Salzen mit Säuren oder Basen in Kombination mit Tensiden in Form von
- (C₁₀-C₁₈)-Fettalkoholpolyglykolethersulfobernsteinsäurehalbestern oder
- (C₁₀-C₁₈)-Fettalkoholpolyglykolethersulfobernsteinsäureestern oder
- Mischungen von (C₁₂-C₁₈)-Alkylsulfobernsteinsäurehalbestern mit (C₁₀-C₁₈)-Fettalkoholpolyglykolethersulfaten oder
- Mischungen von (C₁₀-C₁₈)-Fettalkoholpolyglykolethersulfobernsteinsäurehalbestern mit (C₁₀-C₁₈)-Fettalkoholpolyglykolethersulfaten oder
- Mischungen von (C₁₀-C₁₈)-Fettalkoholpolyglykolethersulfobernsteinsäureestern mit (C₁₀-C₁₈)-Fettalkoholpolyglykolethersulfaten oder
- Mischungen von Isodecylsulfobernsteinsäurehalbestern mit (C₁₀-C₁₈)-Fettalkoholpolyglykolethersulfaten.

2. Mittel gemäß Anspruch 1, **dadurch gekennzeichnet, daß** sie als Tenside Mischungen von (C₁₂-C₁₈)-Alkylsulfobernsteinsäurehalbestern mit (C₁₀-C₁₈)-Fettalkoholpolyglykolethersulfaten **enthalten.**

3. Mittel gemäß Anspruch 1 oder 2, **dadurch gekennzeichnet, daß** sie als Tenside Mischungen von Isodecylsulfobernsteinsäurehalbestern mit (C₁₀-C₁₈)-Fettalkoholpolyglykolethersulfaten enthalten.

4. Mittel gemäß einem der Ansprüche 1 bis 3, **dadurch gekennzeichnet, daß** sie als Tenside (C₁₀-C₁₈)-Fettalkoholpolyglykolethersulfobernsteinsäurehalbester enthalten.

5. Mittel gemäß einem der Ansprüche 1 bis 4, **dadurch gekennzeichnet, daß** sie als Tenside Mischungen von
(C₁₀-C₁₈)-Fettalkoholpolyglykolethersulfobernsteinsäurehalbestern mit (C₁₀-C₁₈)-Fettalkoholpolyglykolethersulfaten enthalten..

6. Mittel gemäß einem der Ansprüche 1 bis 5, **dadurch gekennzeichnet, daß** sie als Tenside (C₁₀-C₁₈)-Fettalkoholpolyglykolethersulfobernsteinsäureester enthalten.

7. Mittel gemäß einem der Ansprüche 1 bis 6, **dadurch gekennzeichnet, daß** sie als Tenside Mischungen von
(C₁₀-C₁₈)-Fettalkoholpolyglykolethersulfobernsteinsäureestern mit (C₁₀-C₁₈)-Fettalkoholpolyglykolethersulfaten enthalten.

8. Mittel gemäß einem der Ansprüche 1 bis 7, **dadurch gekennzeichnet, daß** sie neben 5-40 Gew.-% einer Verbindung (1) den 0,5-8-fachen Gewichtsanteil an den erfindungsgemäßen Tensiden enthalten.

9. Mittel gemäß einem der Ansprüche 1 bis 8, **dadurch gekennzeichnet, daß** sie 4 bis 15 Gew.-% weiterer oberflächenaktiver Substanzen enthalten.

10. Mittel gemäß einem der Ansprüche 1 bis 9, **dadurch gekennzeichnet, daß** sie bis zu 20 Gew.-% eines wassermischbaren polaren organischen Lösungsmittels enthalten.

11. Verfahren zur Bekämpfung von unerwünschten Pflanzen, **dadurch gekennzeichnet, daß** man auf diese oder die landwirtschaftlich genutzten Flächen eine wirksame Menge eines herbiziden Mittels gemäß einem der Ansprüche 1 bis 10 appliziert.

## Claims

1. A liquid herbicidal composition containing a compound of the formula 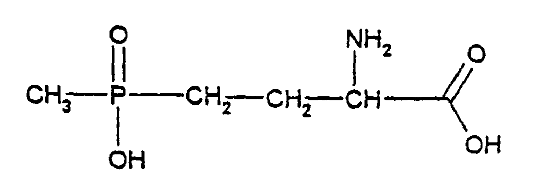 in the form of the racemate or of the L enantiomer, lower alkyl esters thereof or salts thereof with acids or bases in combination with surfactants in the form of
a) - (C₁₀-C₁₈)-fatty alcohol polyglycol ether sulfosuccinic monoesters or
- (C₁₀-C₁₈)-fatty alcohol polyglycol ether sulfosuccinic esters or
- mixtures of (C₁₂-C₁₈) -alkylsulfosuccinic monoesters with (C₁₀-C₁₈)-fatty alcohol polyglycol ether sulfates or
- mixtures of (C₁₀-C₁₈)-fatty alcohol polyglycol ether sulfosuccinic monoesters with (C₁₀-C₁₈)-fatty alcohol polyglycol ether sulfates or
- mixtures of (C₁₀-C₁₈)-fatty alcohol polyglycol ether sulfosuccinic esters with (C₁₀-C₁₈)-fatty alcohol polyglycol ether sulfates or
- mixtures of isodecylsulfosuccinic monoesters with (C₁₀-C₁₈)-fatty alcohol polyglycol ether sulfates.

2. A composition as claimed in claim 1, which contains, as surfactants, mixtures of (C₁₂-C₁₈)-alkylsulfosuccinic monoesters with (C₁₀-C₁₈) -fatty alcohol polyglycol ether sulfates.

3. A composition as claimed in claim 1 or 2, which contains, as surfactants, mixtures of isodecylsulfosuccinic monoesters with (C₁₀-C₁₈) -fatty alcohol polyglycol ether sulfates.

4. A composition as claimed in any of claims 1 to 3, which contains, as surfactants, (C₁₀-C₁₈)-fatty alcohol polyglycol ether sulfosuccinic monoesters.

5. A composition as claimed in any of claims 1 to 4, which contains, as surfactants, mixtures of (C₁₀-C₁₈)-fatty alcohol polyglycol ether sulfosuccinic monoesters with (C₁₀-C₁₈)-fatty alcohol polyglycol ether sulfates.

6. A composition as claimed in any of claims 1 to 5, which contains, as surfactants, (C₁₀-C₁₈)-fatty alcohol polyglycol ether succinic esters.

7. A composition as claimed in any of claims 1 to 6, which contains, as surfactants, mixtures of (C₁₀-C₁₈)-fatty alcohol polyglycol ether sulfosuccinic esters with (C₁₀-C₁₈)-fatty alcohol polyglycol ether sulfates.

8. A composition as claimed in one of claims 1 to 7, which contains, besides 5-40 % by weight of a compound (I), the 0.5-8-fold proportion by weight of the surfactants according to the invention.

9. A composition as claimed in any of claims 1 to 8, which contains 4 to 15% by weight of other surface-active agents.

10. A composition as claimed in any of claims 1 to 9, which contains up to 20% by weight of a water-miscible polar organic solvent.

11. A method of controlling undesired plants, wherein an active amount of a herbicidal composition as claimed in one of claims 1 to 10 is applied to these plants or the agricultural areas.

## Revendications

1. Agents herbicides liquides **caractérisés en ce qu'**ils contiennent un composé de formule 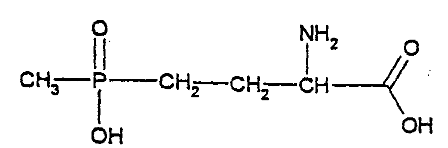 sous la forme du mélange racémique ou de l'énantiomère L, de ses esters de bas poids moléculaire ou de ses sels avec des acides ou des bases en combinaison avec des agents tensioactifs sous la forme de
- hémiesters d'acide sulfosuccinique de polyétherglycols d'alcool gras en C₁₀-C₁₈ ou
- d'esters d'acide sulfosuccinique de polyétherglycols d'alcool gras en C₁₀-C₁₈ ou
- de mélanges d'hémiesters d'acide sulfosuccinique d'alkyle en C₁₂-C₁₈ avec des sulfates de polyétherglycols d'alcool gras en C₁₀-C₁₈ ou
- de mélanges d'hémiesters d'acide sulfosuccinique de polyétherglycols d'alcool gras en C₁₀-C₁₈ avec des sulfates de polyétherglycols d'alcool gras en C₁₀-C₁₈ ou
- de mélanges d'esters d'acide sulfosuccinique de polyétherglycols d'alcool gras en C₁₀-C₁₈ avec des sulfates de polyétherglycols d'alcool gras en C₁₀-C₁₈ ou
- de mélanges d'hémiesters d'acide sulfosuccinique d'isodécyle avec des sulfates de polyétherglycols d'alcool gras en C₁₀-C₁₈.

2. Agents selon la revendication 1, **caractérisés en ce qu'**ils contiennent comme agents tensioactifs des mélanges d'hémiesters d'acide sulfosuccinique d'alkyle en C₁₂-C₁₈ avec des sulfates de polyétherglycols d'alcool gras en C₁₀-C₁₈.

3. Agents selon la revendication 1 ou 2, **caractérisés en ce qu'**ils contiennent comme agents tensioactifs des mélanges d'hémiesters d'acide sulfosuccinique d'isodécyle avec des sulfates de polyétherglycols d'alcool gras en C₁₀-C₁₈.

4. Agents selon l'une des revendications 1 à 3, **caractérisés en ce qu'**ils contiennent comme agents tensioactifs des d'hémiesters d'acide sulfosuccinique de polyétherglycols d'alcool gras en C₁₀-C₁₈.

5. Agents selon l'une des revendications 1 à 4, **caractérisés en ce qu'**ils contiennent comme agents tensioactifs des mélanges
d'hémiesters d'acide sulfosuccinique de polyétherglycols d'alcool gras en C₁₀-C₁₈ avec des sulfates de polyétherglycols d'alcool gras en C₁₀-C₁₈.

6. Agents selon l'une des revendications 1 à 5, **caractérisés en ce qu'**ils contiennent comme agents tensioactifs des esters d'acide sulfosuccinique de polyétherglycols d'alcool gras en C₁₀-C₁₈.

7. Agents selon l'une des revendications 1 à 6, **caractérisés en ce qu'**ils contiennent comme agents tensioactifs des mélanges
d'esters d'acide sulfosuccinique de polyétherglycols d'alcool gras en C₁₀-C₁₈ avec des sulfates de polyétherglycols d'alcool gras en C₁₀-C₁₈.

8. Agents selon l'une des revendications 1 à 7, **caractérisés en ce qu'**ils contiennent en plus de 5 à 40% en poids d'un composé (I) la proportion de 0,5 à 8 fois en poids des agents tensioactifs selon l'invention.

9. Agents selon l'une des revendications 1 à 8, **caractérisés en ce qu'**ils contiennent de 4 à 15% en poids d'autres substances tensioactives.

10. Agents selon l'une des revendications 1 à 9, **caractérisés en ce qu'**ils contiennent jusqu'à 20% en poids d'un solvant organique polaire miscible à l'eau.

11. Procédé de lutte contre les plantes nuisibles, **caractérisé en ce qu'**on applique sur celles-ci ou sur les surfaces agricoles utilisées une quantité efficace d'un agent herbicide selon l'une des revendications 1 à 10.
